(19) Europäisches Patentamt
European Patent Office
Office européen des brevets

(11) **EP 4 130 603 B1**

(12) **EUROPEAN PATENT SPECIFICATION**

(45) Date of publication and mention
of the grant of the patent:
**30.04.2025 Bulletin 2025/18**

(21) Application number: **22187936.4**

(22) Date of filing: **29.07.2022**

(51) International Patent Classification (IPC):
**F24H 9/13** *(2022.01)* **F28D 20/00** *(2006.01)*
**F24D 3/08** *(2006.01)*

(52) Cooperative Patent Classification (CPC):
**F24D 3/082; F24H 9/133; F28D 20/00;**
**F28D 20/0039;** F24D 2220/08; F28D 2020/0069;
Y02E 60/14

(54) **DIFFUSER FOR HOT WATER TANK**

DIFFUSOR FÜR EINEN WARMWASSERBEHÄLTER

DIFFUSEUR POUR RÉSERVOIR D'EAU CHAUDE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **02.08.2021 BE 202105612**

(43) Date of publication of application:
**08.02.2023 Bulletin 2023/06**

(73) Proprietor: **Daikin Europe N.V.**
**8400 Oostende (BE)**

(72) Inventors:
• **RAMIREZ LASTRA, Monica**
**8400 Oostende (BE)**
• **AMEEL, Bernd**
**8400 Oostende (BE)**

(74) Representative: **Brantsandpatents bv**
**Pauline Van Pottelsberghelaan 24**
**9051 Ghent (BE)**

(56) References cited:
EP-A2- 0 928 940       WO-A1-2019/110058
CN-A- 107 179 014     CN-A- 109 114 657
DE-B3- 102007 027 570     JP-A- S5 872 838

## Description

## TECHNICAL FIELD

The present invention relates to water storage tank accessories. In particular, the present invention relates to a diffuser for a hot water storage tank.

## BACKGROUND

Hot water tanks are broadly used in domestic applications as thermal and energy storage systems. To achieve high performance during the use of domestic hot water, and better energy and thermal storage capacity, it is necessary to have a highly stratified tank. Hot-water stratified storage tanks are widely known. They serve as far as possible to prevent mixing of hotter and colder water components when loading the storage tank. In this way, heat energy is maintained at the highest possible temperature and thus can be used efficiently.

In this context, stratification is understood as the occurrence and maintenance of adjacent, vertically distributed masses of water of different temperature and density. In a stratified tank, a cold layer of water is present at the bottom of the tank by virtue of its higher density. In the same stratified tank, a hot water layer is present at the top of the water column due to its lower density. These two water layers are separated by a medium temperature middle layer commonly referred to as thermocline.

As is typical of its function, a domestic water tank is subject to introduction and extraction of water. This water, either supplied or extracted, can range from cold to hot. It is particularly advantageous if warm water can be directly introduced within the warm water layer already present within the water tank. This permits, though not limited to, a faster availability of hot water. In a similar way, it is advantageous to introduce cold water within the cold water layer inside the water tank.

In particular during the introduction of water into the tank, vortices tend to form at or near inlet openings. Said vortices tend to be more pronounced as the inflow rate of water increases. These vortices negatively affect the stratification developed inside a water storage tank by promoting the mixing of the different water layers.

It is therefore an important aspect of the performance of a water storage tank that high flow rates into the tank can be attained while mitigating, or preferably, eliminating stratification destroying vortices.

DE102004035026A discloses a vortex mitigation element for a water storage tank. Said element is a plate or plate like construction comprising a number of through holes on its surface through which water can flow. This element is presented placed close to the domed bottom or top of a water tank, such that a hollow is formed by said element and the domed bottom of said tank, wherein, a water inlet/outlet tube is placed. In another embodiment presented in the same document, a perforated box like construction is shown enveloping an inlet tube. In said construction, water flow into the tank is initially disrupted by said box like construction before being discharge in a substantially vertical direction into the water tank. A similar concept and embodiment thereof is presented in patent document WO2013083911. In this document, a box like construction is provided which comprises one or more inlet tubes mounted inside said construction. Said tubes are mounted adjacent an in substantial tangential alignment with the perimeter of the box, thereby promoting the circulation of inflowing water along said perimeter. Water is then allowed to exit the box in a substantially vertical direction, though one or more holes mounted on the top and/or bottom of said box.

The abovementioned concepts and embodiments present a disadvantage that should be obvious to those skilled in the art. Said advantage lies in the fact that water exiting any of the abovementioned box like constructions does so in a mostly vertical direction. Said direction, being substantially normal to the boundary area between water zones, has the most potential to create upward/downwards drafts, which will disturb the stratification inside the tank.

CN109114657 discloses a kind of regenerative apparatus of forced layering equipped with at least one floating water distribution element, which element is substantially disk shaped and configured to minimize disturbance to stratification layers of a heat storage medium. Further examples of such disk shaped water distribution elements are found in JPS5872838 and CN107179014, said devices having opening lying on the horizontal plane along their entire periphery are provided at a water supply port and a water intake port respectively.

KR101055349 discloses a concept and multiple embodiments of a diffuser of plate like construction comprising a plate equipped with an approximately centered hole and a second plate mounted substantially parallel and in axial alignment with the first. The hole in the first plate is suitable to receive a water inlet tube, wherein the last section of said tube is oriented substantially perpendicular to the surfaces of both plates. By this concept, mitigation of stratification destroying vortices is attained partially by reducing the flow of water being provided to the tank. Further mitigation of said vortices is attained by the second plate, whereby the momentum of water flowing form the tube is mitigated. In this way, the vortices created by water exiting the end of the tube are mitigated before said water is discharged along the perimeter of the plates.

EP0928940 discloses a water heater baffle comprising an inlet and an outlet for the passage of water there through, wherein the baffle arrangement forces the water entering the baffle through a labyrinth before exiting the baffle in a direction substantially 90° to its general flow of entry into the baffle. A similar construction can be found in DE102007027570. DE '570 discloses a loading and/or unloading system for a thermal energy storage with a liquid container having at least one liquid inlet and at least one liquid outlet, wherein the liquid inlet and / or the liquid outlet has at least one liquid line. Said liquid inlet/outlet opens into a radial diffuser, through which liquid is directed into or out of the liquid container, and wherein the diffuser has a centrally disposed and connected to the liquid line diffuser connection region and radially from the diffuser connection region extending, spaced diffuser plates. Yet another similar construction is disclosed in WO2019110058, wherein a feed apparatus having at least two or more guide elements pointing radially outward is used to introduce and/or extract water from a thermal energy store. The guide elements of the feed apparatus are disposed in an arcuate shape for producing a swirling flow, and/or two or more guide elements pointing radially outward in an arcuate shape adjoin the feed apparatus.

The aforementioned concept and embodiments thereof permit the exit of water out of the diffuser and into the tank in a substantially horizontal direction. However, and in order to sufficiently mitigate vortices before they exit said diffuser, a large volume inside the diffuser must be provided, resulting in a diffuser of large dimensions. These large dimensions preclude the installation of such a diffuser in smaller tanks, in particular where flow rates are desirable.

The present invention aims to resolve at least some of the problems and disadvantages mentioned above.

## SUMMARY

The present invention and embodiments thereof serve to provide a solution to one or more of the above-mentioned disadvantages. To this end, the present invention relates to a diffuser for introducing water into a water tank according to claim 1.

It is an object of the present invention to make available a diffuser which permits, compared to similar diffusers in prior art, minimizing the disturbance to the stratification inside domestic hot water tanks during supply of water.

A more particular object of the invention is to make available a diffuser which, can introduce water as a thin layer. In this way, disturbance to stratification inside a hot water tank can be avoided. In particular, water can be introduced into very thin layers of stratified water

It is a particular object of the invention to make available a diffuser comprising deflection elements suitable for the destruction or at least the mitigation of vortices created by water inflow. It is yet another object of the invention to make available a diffuser in which said deflection elements are provided encased in two disks. In this way, vortices can be shrouded by the diffusers disks as the deflection elements destroy or minimizes said vortices.

Preferred embodiments of the inventions are presented in claim 2 to claim 11. Here, two main embodiments of the invention are disclosed. A first embodiment wherein the deflection elements are cylindrical rings mounted substantially concentric with the center of the disks. In a second embodiment, pins are used as deflection elements.

According to an aspect of the invention, a diffuser is made available, which diffuser comprises a plurality of cylindrical deflectors as deflection elements mounted in two opposing disks. Said cylindrical deflectors are mounted onto said disks such that cylindrical deflectors mounted onto one disk intercalate with cylindrical deflectors mounted upon the opposing disk. In this way, the momentum of the water flowing through the diffuser can be redirected and thereby dampened while still inside the diffuser.

According to another aspect of the invention, a diffuser is made available, which diffuser comprises a plurality of pins as deflection elements mounted onto at least one of two opposing disk. Said pins are mounted onto a disk so as to reduce or eliminate straight paths provided to the water moving between the center and the outer edge of the diffuser. In this way, the formation of vortices is prevented inside the diffuser.

## BRIEF DESCRIPTION OF THE DRAWINGS

Figure 1 illustrates a diffuser with cylindrical deflectors.
Figure 2 illustrates an exploded view of a diffuser with cylindrical deflectors.
Figure 3 illustrates a section view diffuser with cylindrical deflectors.
Figure 4 illustrates a diffuser with pins
Figure 5 illustrates a section view of a diffuser with pins

## DETAILED DESCRIPTION

The present invention concerns a diffuser (1) for hot water storage tanks, which permits supply of water to said water tank.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"A", "an", and "the" as used herein refers to both singular and plural referents unless the context clearly dictates otherwise. By way of example, "a compartment" refers to one or more than one compartment.

"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the invention described herein are capable of operation in other sequences than described or illustrated herein.

The recitation of numerical ranges by endpoints includes all numbers and fractions subsumed within that range, as well as the recited endpoints.

Whereas the terms "one or more" or "at least one", such as one or more or at least one member(s) of a group of members, is clear per se, by means of further exemplification, the term encompasses inter alia a reference to any one of said members, or to any two or more of said members, such as, e.g., any $\geq 3$, $\geq 4$, $\geq 5$, $\geq 6$ or $\geq 7$ etc. of said members, and up to all said members.

In a first aspect, the invention relates to a vastly improved diffuser (1) configured to receive water through a center inlet and to dispense said water through a radial outlet, and into a cylindrical water tank, said diffuser comprising:

a first disk (2) equipped with an center inlet (8) and a second similar sized, preferably equal sized disk (3) to be placed parallel to the first disk (2), said disks being spaced apart by a plurality of struts (4) extending towards said disks, said struts being identical and equally spaced around the perimeter of both disks, and;

a substantially cylindrical space defined by said parallel arranged disks into which water admitted through the center inlet of the first disk flows and from which said water is radially discharged through a radial outlet between the two disks;

characterized in that, a plurality of parallel arranged deflection elements extending towards one or both disks from one or both disks, said deflection elements being preferably cylindrical and/or contained within the cylindrical space between the disks wherein at least one of the disks is domed on the surface facing the inside of the diffuser, the height of the preferably cylindrical deflection elements is largest at the center of the diffuser and decreases progressively with each subsequent deflection element towards the perimeter of said diffuser.

The domed disks (2, 3) permit a larger volume inside the diffuser (1), which volume allows, advantageously a more efficient reduction of the water velocity, as the vortices at the inlet of the diffuser are gradually broken down into smaller innocuous vortices.

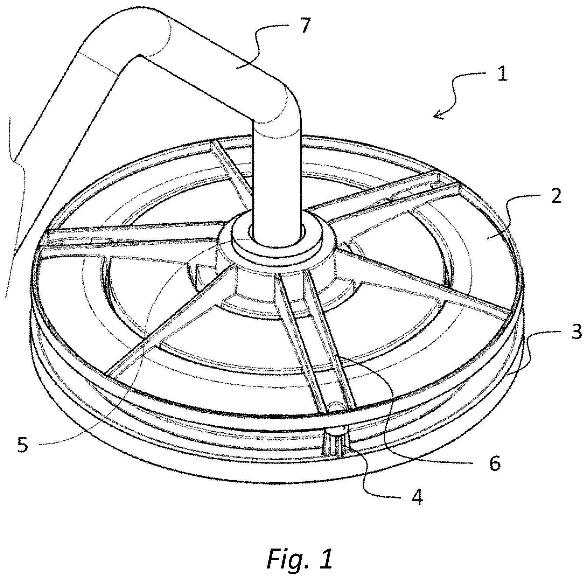

Fig 1 shows an embodiment of a diffuser (1) comprising a first disk (2) and a second disk (3). Said disks being assembled parallel to each other by means of a plurality of struts (4) such that a uniform distance is defined between said two disk around the whole perimeter of the diffuser (1). Said first disk (2) is here presented assembled onto a pipe (7) via a pipe extension (5). Each disk (2) and 3 are provided with a plurality of reinforcing ribs (6) in order to improve the rigidity of each disk and, and, consequently, the rigidity of the whole diffuser.

The diffuser (1), and in particular, the deflection element provide, when compared to the prior art, a vastly more efficient reduction of the velocity of the water admitted into the diffuser (1). Furthermore, the deflection elements integral to the diffuser (1) of the present invention allow, advantageously, to inhibit the formation of vortices by arresting turbulent flows resulting from the higher velocity with which the water enters the diffuser (1). The reduction of these vortices allows for a gentler introduction of water into a water tank. This is particularly advantageous where water stratification of hot and cold water layers is desired.

In this context, "turbulence" is defined as a fluid motion characterized by chaotic changes in pressure and flow velocity. Vortices are a major component of a turbulent flow. The terms "vortex" or "vortices" are defined as regions of a fluid in which the flow revolves around an axial line, which line can be either straight or curved. In this context, the terms "stratification" and "stratified" define, respectively, the action and state of separation of a water column into different layers having different temperatures. Each of said layers having a substantially uniform temperature.

According to an embodiment of the present invention, the diameter of any of the round disks (2, 3) is less than half of the diameter of the tank where it is installed. The diffuser (1) is installed in the tank so that the center axis of the disks (2, 3) is in a vertical direction. In this way, water delivered out of the diffuser (1) is provided with enough distance to sufficiently slow down further before reaching the side walls of the tank, thereby avoiding any further disturbance to the water in the tank.

According to a further or another embodiment of the invention the radial outlet has an area substantially larger than the area of the inlet (8) of the diffuser (1). Preferably, the distance between the two disks (2, 3) is kept small. In this way, the flow of water leaving the diffuser (1) can be maintained as a substantially thin and uniform film of water, while still maintaining an outlet area substantially larger than the inlet area of the diffuser (1).

In a preferred embodiment of the diffuser (1), the flow of water through the inlet (8) of the diffuser (1), the height of the outlet of the diffuser (1) and the diameter of the diffuser (1) are related to each other by means of a ratio of proportionality. In particular, the aforementioned variables are governed by the following equations:

$$\frac{Q^2 \cdot \rho}{d \cdot h \cdot \pi} = c_1$$

$$\frac{Q}{h \cdot d \cdot \pi \cdot \sqrt{g \cdot h}} = c_2$$

wherein, Q is the flow in cubic meters per second, h is the gap (12) between the round disks (2, 3) in meters, d is the diameter of the diffuser (1), $\pi$ is 3.14, g is the acceleration of gravity in meters per second per second, $\rho$ is the density of the fluid in Kilograms per cubic meter and $c_1$ and $c_2$ are constant ratios. To provide an optimal rate of the jets to its buoyancy, the value of $c_1$ should be between 0.0001 and 0.0004, most preferably, $c_1$ should be 0.0002195. The value of $c_2$ should be between 0.01 and 0.05, as obtained from the Froude number relation. More preferably, $c_2$ should be 0.03. In this way, optimal reduction of the velocity at the outlet of the diffuser (1) and optimal reduction of vortices can be attained for different water flows and tank dimensions.

According to a further or another embodiment of the radius of curvature of any domed disk (2, 3) is such that the angle tangent to said curvature at the outer edge of the dome defines an angle with the horizontal plane which angle is more than 10 degrees. Said angle permits dispensing the water coming out of the diffuser in a more advantageous direction. More preferably, said angle is combined with a smooth curvature of domed inner surface of the disk, thereby avoiding the creation of further turbulence.

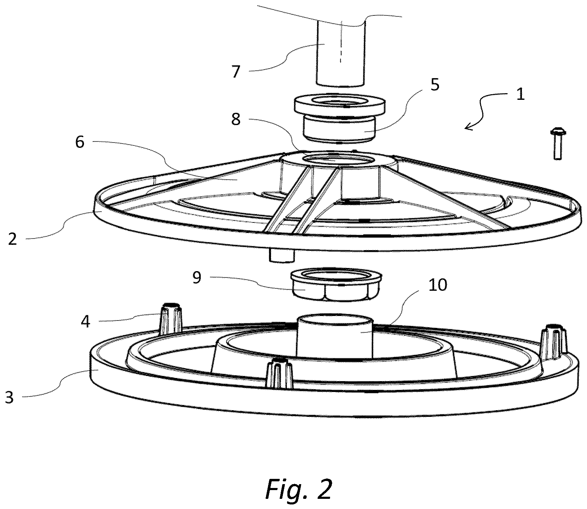

According to a further or another embodiment of the invention and as illustrated in Fig. 2-3, the plurality of deflection elements comprise of cylindrical shapes which are formed in each of the first and second discs and extended towards the cylindrical space. According to a further embodiment of the invention, a first cylindrical shapes formed on the first disc (2) and a second cylindrical shapes formed on the second disc (2) are arranged such that said cylindrical shapes intercalate. According to a further embodiment of the invention, the number of second cylindrical shapes formed in the second disk (3) is larger than the number of the first cylindrical shapes. Preferably, the diffuser incudes five vertically extending cylindrical deflection elements (10) arranged concentric with the centerline of the diffuser (1). In particular, the position of each said cylindrical deflection elements (10) being defined in function of the diameter of the diffuser (1). The diameter of each deflection element (10) $D_{fi}$ is given by the following five equations:

$$D_{f1} = 0,147d$$

$$D_{f2} = 0,333d$$

$$D_{f3} = 0,461d$$

$$D_{f4} = 0,689d$$

$$D_{f5} = 0,822d$$

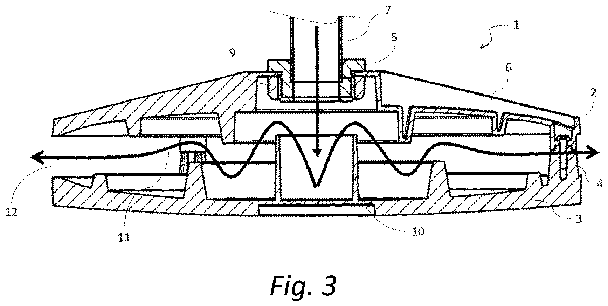

wherein, d is the diameter of any disk (2, 3) of the diffuser. More preferably, the first disk is configured to receive water through a center inlet (8) and is equipped with two cylindrical deflection elements (10). The second disk (3) is configured to be in front of the water entering the diffuser (1) through the first disk (3), which second disk (3) is equipped with three cylindrical deflection elements (10). Said cylindrical deflection elements (10) being arranged on their respective disks (2, 3) such that said cylindrical deflection elements (10) intercalate. The height of the cylindrical deflection elements (10) being largest at the center of the diffuser (1) and decreasing progressively with each subsequent deflection element towards the perimeter of said diffuser (1) advantageously combines with.the positioning of the deflection elements to more advantageously permit the interruption of vortices. The internal geometry of the diffuser (1) as described herein permits, advantageously, the partial formation of vortices in the larger more central volumes of the diffuser (1). A cycle of partial vortex formation and breakdown is repeated by effect of each subsequent deflection element. Fig. 3 illustrates such the resulting flow through the diffuser (1). In this figure, the pipe (7) and the interior of the diffuser (1) are in fluid connection by intermediate of pipe extension (5). Said pipe extension (5) being rigidly attached to the first disk (2) by action of the nut (9). Further depicted in Figure 3 is the flow of the water admitted into the diffuser (1). Said water is admitted via the pipe (7), and through inlet (8), said inlet (8) not being shown in the figure. Upon entering the diffuser, said water encounters a first cylindrical deflection element (10), by action of which, the flow of said water is forced to change direction and to exit said deflection element (10). Further deflection elements are provided integral to the first disk (2) and the second disk (3), said deflection elements being positioned such that they intercalate, and thereby inducing a water flow (11) as shown in figure 3. Once water flow (11) reaches the last deflection element, said water leaves the diffuser through a gap (12) defined by the perimetral circumference of the first disk (2) and the second disk (3). The number of deflection elements included in the present embodiment of the invention is sufficient to fully arrest any vortices before these reach the outlet of the diffuser (1).

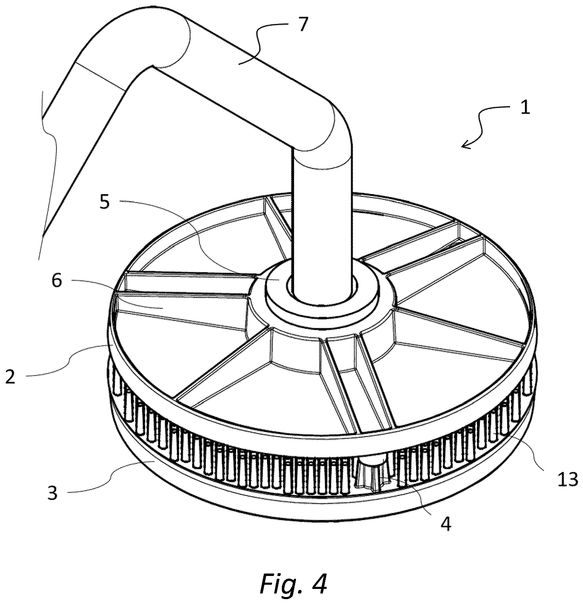

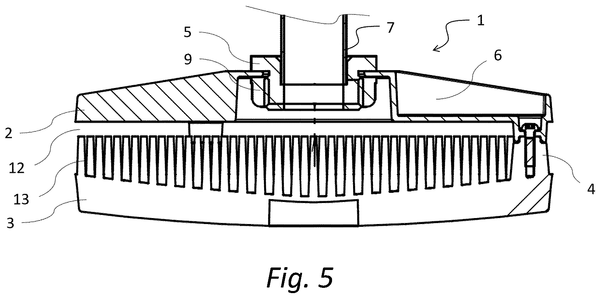

In another preferred embodiment of the invention, and as illustrated in Fig. 4-5, the deflection elements integral to the diffuser (1) of this invention are cylindrical pins (13) integrated in the second disk (3) and disposed either in a square pattern or a radially staggered pattern. Preferably, the top ends of all the pins (13) are contained in the same horizontal plane. The aforementioned internal geometry of the diffuser (1) permits, advantageously, an faster vortex arrestment, allowing for more compact diffusers to be used. As illustrated in Fig. 4, the diffuser (1) is provided with a plurality of pins (13) as deflection elements. This embodiment of the invention comprises also a first disk (2) and second disk (3) rigidly attached and spaced evenly and in parallel to one another by means of a plurality of struts (4).

In a further or another embodiment of the invention, the inlet (8) on the first disk (2) is suitable to be attached to a pipe (7) segment, either by a full thread, an interrupted thread or an interrupter collar. In Fig. 4, diffuser attached to a pipe (7) by intermediate of a pipe extension (5) in fluid attachment to the interior of the diffuser (1) through a center inlet (8) on the first disk (2).

Preferably, a pipe extension (5) is provided which incorporates said full thread, interrupted thread or interrupter collar. In this way, a rigid attachment of the diffuser (1) can be attained with a wider diversity of pipe diameters. Preferably, said full thread, interrupted thread or interrupter collar are attached to a compatible fastener placed inside the diffuser (1). More preferably, said diffuser (1) will incorporate such features in the geometry of its inlet, such that said pipe extension can be directly mounted to said inlet (8) of the diffuser (1). As shown in Fig. 4, in a preferred embodiment of the diffuser, a plurality of reinforcement ribs (6) provide added rigidity of both the first disk (2) and the second disk (3).

List of numbered items

1　diffuser
2　first disk
3　second disk
4　strut
5　pipe extension
6　reinforcement rib
7　pipe
8　inlet
9　nut
10　cylindrical deflection element
11　water flow
12　gap
13　pin deflection elements

**Claims**

**1.** A diffuser (1) configured to receive water through a center inlet (8) and to dispense said water through a radial outlet, and into a cylindrical water tank, said diffuser (1) comprising:

a first disk (2) equipped with a center inlet (8) and a second similar sized, preferably equal sized disk (3) to be placed parallel to the first disk (2), said disks being spaced apart by a plurality of struts (4) extending towards said disks, and;
a substantially cylindrical space defined by said parallel arranged disks into which water admitted through the center inlet (8) of the first disk (2) flows and from which said water is radially discharged through a radial outlet between the two disks;
a plurality of parallel arranged deflection elements (10) extending towards one or both disks from one or both disks, said deflection elements being contained within the cylindrical space between the disks wherein at least one of the disks is domed on the surface facing the inside of the diffuser (1);
**characterized in that**, the deflection elements are cylindrical, the height of the cylindrical deflection elements (10) is largest at the center of the diffuser (1) and decreases progressively with each subsequent deflection element towards the perimeter of said diffuser (1).

**2.** A diffuser (1) according to claim 1, **characterized in that**, the radial outlet has an area substantially larger than the inlet (8) of the diffuser (1).

**3.** A diffuser (1) according to claim 1 and 2, **characterized in that**, the radius of curvature of any domed disk is such that the angle tangent to said curvature at the outer edge of the dome defines an angle with the horizontal plane, which angle is more than 10 degrees.

**4.** A diffuser (1) according to claim 1 to claim 3, **characterized in that**, the plurality of deflection elements comprise of cylindrical shapes which are formed in each of the first and second disks and extended towards the cylindrical space.

**5.** A diffuser (1) according to claim 4, wherein, a first cylindrical shapes formed on the first disk and a second cylindrical shapes formed on the second disk are arranged such that said cylindrical shapes intercalate.

**6.** A diffuser (1) according to claim 5, **characterized in that** the number of second cylindrical shapes formed in the second disk (3) is larger than the number of the first cylindrical shapes.

**7.** A diffuser (1) according to claim 1 to claim 3, **characterized in that**, said deflection elements are cylindrical pins (13) integrated in the second disk (3) and disposed either in a square pattern or a radially staggered pattern.

**8.** A diffuser (1) according to claim 7, **characterized in that**, the top ends of all the pins (13) are contained in the same horizontal plane.

9. A diffuser (1) according to any claim 1 to claim 8, **characterized in that**, the hole of the first disk (2) is suitable to be attached to a pipe (7) segment, either by a full thread, an interrupted thread or an interrupter collar.

10. A tank system comprising a cylindrical

water tank and at least one diffuser (1) according to any claim 1-9, **characterized in that**, the diameter of the diffuser (1) is less than half of the inner diameter of the water tank.

11. The system according to claim 10, **characterized in that**, the flow of water through the inlet (8) of the diffuser (1), the height (h) of the outlet of the diffuser (1) and the diameter (d) of the diffuser (1) are related to each other by means of two equations, constant ratio c1, constant ratio c2, c1 having a value between 0.0001 and 0.0004, c2 having a value between 0.01 and 0.05, said two equations being $(Q^2 \cdot \rho)/(d \cdot h \cdot \pi) = c\_1$; $Q/(h \cdot d \cdot \pi \cdot \sqrt{(g \cdot h)}) = c\_2$, wherein, Q is the flow in cubic meters per second, h is the gap (12) between the round disks (2, 3) in meters, d is the diameter of the diffuser (1), n is 3.14, g is the acceleration of gravity in meters per second per second, $\rho$ is the density of the fluid in Kilograms per cubic meter.

**Patentansprüche**

1. Diffuser (1), der dafür gestaltet ist, Wasser durch einen mittigen Einlass (8) aufzunehmen und das Wasser durch einen radialen Auslass abzugeben, und zwar in einen zylindrischen Wassertank, wobei der Diffuser (1) Folgendes umfasst:

   eine erste Scheibe (2), die mit einem mittigen Einlass (8) versehen ist, und
   eine zweite Scheibe (3) von ähnlicher Größe, vorzugsweise von gleicher Größe, die parallel zu der ersten Scheibe (2) anzuordnen ist, wobei die Scheiben durch mehrere Streben (4) voneinander beabstandet sind, die sich zu den Scheiben erstrecken, und
   einen im Wesentlichen zylindrischen Raum, der durch die parallel angeordneten Scheiben definiert ist und in den Wasser fließt, das durch den mittigen Einlass (8) der ersten Scheibe (2) eingelassen wird, und aus dem Wasser radial durch einen radialen Auslass zwischen den zwei Scheiben ausgestoßen wird,
   mehrere parallel angeordnete Umlenkelemente (10), die sich von einer oder beiden Scheiben zu einer oder beiden Scheiben erstrecken, wobei die Umlenkelemente innerhalb des zylindrischen Raums zwischen den Scheiben enthalten sind, wobei mindestens eine der Scheiben an einer Oberfläche, die zum Inneren des Diffusers (1) weist, gewölbt ist,
**dadurch gekennzeichnet, dass** die Umlenkelemente zylindrisch sind, die Höhe der zylindrischen Umlenkelemente (10) in der Mitte des Diffusers (1) am größten ist und mit jedem nachfolgenden Umlenkelement zum Umfang des Diffusers (1) hin schrittweise abnimmt.

2. Diffuser (1) nach Anspruch 1, **dadurch gekennzeichnet, dass** der radiale Auslass eine wesentlich größere Fläche als der Einlass (8) des Diffusers (1) aufweist.

3. Diffuser (1) nach Anspruch 1 und 2, **dadurch gekennzeichnet, dass** der Krümmungsradius jedweder gewölbten Scheibe derart ist, dass die Winkeltangente an der Krümmung am Außenrand der Wölbung einen Winkel mit der horizontalen Ebene bildet, wobei der Winkel mehr als 10 Grad beträgt.

4. Diffuser (1) nach Anspruch 1 bis Anspruch 3, **dadurch gekennzeichnet, dass** die mehreren Umlenkelemente aus zylindrischen Formen bestehen, die in jeder der ersten und der zweiten Scheibe gebildet sind und sich zu dem zylindrischen Raum erstrecken.

5. Diffuser (1) nach Anspruch 4, wobei erste zylindrische Formen, die an der ersten Scheibe gebildet sind, und zweite zylindrische Formen, die an der zweiten Scheibe gebildet sind, derart angeordnet sind, dass die zylindrischen Formen ineinandergefügt sind.

6. Diffuser (1) nach Anspruch 5, **dadurch gekennzeichnet, dass** die Anzahl zweiter zylindrischer Formen, die in der zweiten Scheibe (3) gebildet sind, größer ist als die Anzahl der ersten zylindrischen Formen.

7. Diffuser (1) nach Anspruch 1 bis Anspruch 3, **dadurch gekennzeichnet, dass** die Umlenkelemente zylindrische Stifte (13) sind, die in die zweite Scheibe (3) integriert und entweder in einem quadratischen Muster oder in einem radial versetzten Muster angeordnet sind.

8. Diffuser (1) nach Anspruch 7, **dadurch gekennzeichnet, dass** die oberen Enden aller Stifte (13) in derselben horizontalen Ebene enthalten sind.

9. Diffuser (1) nach einem der Ansprüche 1 bis 8, **dadurch gekennzeichnet, dass** das Loch der ersten Scheibe (2) geeignet ist, an einem Segment eines Rohrs (7) angebracht zu sein, entweder mit einem Vollgewinde, einem unterbrochenen Gewinde oder einem Unterbrecher.

10. Tanksystem, das einen zylindrischen Wassertank und mindestens einen Diffuser (1) nach einem der Ansprüche 1 bis 9 umfasst, **dadurch gekennzeichnet, dass** der Durchmesser des Diffusers (1) kleiner ist als die Hälfte des Durchmessers des Wassertanks.

11. System nach Anspruch 10, **dadurch gekennzeichnet, dass** der Durchfluss von Wasser durch den Einlass (8) des Diffusers (1), die Höhe (h) des Auslasses des Diffusers (1) und der Durchmesser (d) des Diffusers (1) mittels zweier Gleichungen in Beziehung gesetzt sind, eines konstanten Verhältnisses c1, eines konstanten Verhältnisses c2, wobei c1 einen Wert zwischen 0,0001 und 0,0004 aufweist, c2 einen Wert zwischen 0,01 und 0,05 aufweist und die zwei Gleichungen lauten: $(Q^2\cdot)/(d\cdot h\cdot\pi)=c\_1$; $Q/(h\cdot d\cdot\pi\cdot\sqrt{(g\cdot h)})=c\_2$, wobei Q der Durchfluss in Kubikmetern pro Sekunde ist, h der Zwischenraum (12) zwischen den runden Scheiben (2, 3) in Metern ist, d der Durchmesser des Diffusers (1) ist, $\pi$ 3,14 beträgt, g die Beschleunigung der Schwerkraft in Metern pro Quadratsekunde ist, $\rho$ die Dichte des Fluids in Kilogramm pro Kubikmeter ist.

## Revendications

1. Diffuseur (1) configuré pour recevoir de l'eau par une entrée centrale (8) et pour distribuer ladite eau par une sortie radiale, et dans un réservoir d'eau cylindrique, ledit diffuseur (1) comprenant :

   un premier disque (2) pourvu d'une entrée centrale (8) et
   un second disque (3) de taille similaire, de préférence de taille égale, destiné à être placé parallèlement au premier disque (2), lesdits disques étant espacés l'un de l'autre par une pluralité d'entretoises (4) s'étendant vers lesdits disques, et ;
   un espace sensiblement cylindrique défini par lesdits disques disposés parallèlement dans lequel s'écoule l'eau admise par l'entrée centrale (8) du premier disque (2) et à partir duquel ladite eau est évacuée radialement par une sortie radiale entre les deux disques ;
   une pluralité d'éléments de déviation (10) disposés parallèlement s'étendant vers un ou les deux disques à partir d'un ou des deux disques, lesdits éléments de déviation étant contenus dans l'espace cylindrique entre les disques dans lequel au moins l'un des disques est bombé sur la surface faisant face à l'intérieur du diffuseur (1) ;

   **caractérisé en ce que** les éléments de déviation sont cylindriques, la hauteur des éléments de déviation cylindriques (10) est la plus grande au centre du diffuseur (1) et diminue progressivement avec chaque élément de déviation subséquent vers le périmètre dudit diffuseur (1).

2. Diffuseur (1) selon la revendication 1, **caractérisé en ce que** la sortie radiale a une surface sensiblement plus grande que l'entrée (8) du diffuseur (1).

3. Diffuseur (1) selon les revendications 1 et 2, **caractérisé en ce que** le rayon de courbure de tout disque en forme de dôme est tel que l'angle tangent à ladite courbure au niveau du bord extérieur du dôme définit un angle avec le plan horizontal, angle qui est supérieur à 10 degrés.

4. Diffuseur (1) selon la revendication 1 à 3, **caractérisé en ce que** la pluralité d'éléments de déviation comprend des formes cylindriques qui sont formées dans chacun des premier et second disques et s'étendent vers l'espace cylindrique.

5. Diffuseur (1) selon la revendication 4, dans lequel une première forme cylindrique formée sur le premier disque et une seconde forme cylindrique formée sur le second disque sont disposées de telle sorte que lesdites formes cylindriques s'intercalent.

6. Diffuseur (1) selon la revendication 5, **caractérisé en ce que** le nombre de secondes formes cylindriques formées dans le second disque (3) est supérieur au nombre des premières formes cylindriques.

7. Diffuseur (1) selon la revendication 1 à la revendication 3, **caractérisé en ce que** lesdits éléments de déviation sont des broches cylindriques (13) intégrées dans le second disque (3) et disposées soit dans un motif carré, soit dans un motif radialement décalé.

8. Diffuseur (1) selon la revendication 7, **caractérisé en ce que** les extrémités supérieures de toutes les broches (13) sont contenues dans le même plan horizontal.

9. Diffuseur (1) selon l'une quelconque des revendications 1 à 8, **caractérisé en ce que** le trou du premier disque (2) est apte à être fixé à un segment de tuyau (7), soit par un filetage complet, soit par un filetage interrompu, soit par un collier interrupteur.

10. Système de réservoir comprenant un réservoir d'eau cylindrique et au moins un diffuseur (1) selon l'une quelconque des revendications 1 à 9, **caractérisé en ce que** le diamètre du diffuseur (1) est inférieur à la moitié du diamètre intérieur du réservoir d'eau.

**11.** Système selon la revendication 10, **caractérisé en ce que** le débit d'eau à travers l'entrée (8) du diffuseur (1), la hauteur (h) de la sortie du diffuseur (1) et le diamètre (d) du diffuseur (1) sont liés entre eux au moyen de deux équations, d'un rapport constant c1, d'un rapport constant c2, c1 ayant une valeur comprise entre 0,0001 et 0,0004, c2 ayant une valeur comprise entre 0,01 et 0,05, lesdites deux équations étant $(Q^2 \cdot \rho)/(d \cdot h \cdot \pi) = c_1$ ; $Q/(h \cdot d \cdot \pi \cdot \sqrt{(g \cdot h)}) = c_2$, où Q est le débit en mètres cubes par seconde, h est l'espace (12) entre les disques ronds (2, 3) en mètres, d est le diamètre du diffuseur (1), n vaut 3,14, g est l'accélération de la gravité en mètres par seconde par seconde, $\rho$ est la densité du fluide en kilogrammes par mètre cube.

Fig. 1

*Fig. 2*

*Fig. 3*

*Fig. 4*

*Fig. 5*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102004035026 A
- WO 2013083911 A
- CN 109114657
- JP S5872838 B
- CN 107179014
- KR 101055349
- EP 0928940 A
- DE 102007027570
- WO 2019110058 A